Europäisches Patentamt

**European Patent Office**

**Office européen des brevets**

(11) Veröffentlichungsnummer: **0 231 448**
**B1**

(12) # EUROPÄISCHE PATENTSCHRIFT

(45) Veröffentlichungstag der Patentschrifft:
**17.01.90**

(51) Int. Cl. ⁴: **B 60 C 11/04**

(21) Anmeldenummer: **86115887.1**

(22) Anmeldetag: **15.11.86**

(54) Laufflächengestaltung für Fahrzeugluftreifen.

(30) Priorität: **11.01.86 DE 3600618**

(43) Veröffentlichungstag der Anmeldung:
**12.08.87 Patentblatt 87/33**

(45) Bekanntmachung des Hinweises auf die Patenterteilung:
**17.01.90 Patentblatt 90/03**

(84) Bennante Vertragsstaaten:
**AT BE CH DE ES FR GB GR IT LI LU NL SE**

(56) Entgegenhaltungen:
**FR-A-938 797**
**FR-A-1 528 052**
**GB-A-869 980**
**GB-A-2 056 925**
**GB-A-2 073 679**

(73) Patentinhaber: **Continental Aktiengesellschaft**
**Königsworther Platz 1**
**D-3000 Hannover 1 (DE)**

(72) Erfinder: **Seitz, Hans, Dr.**
**Grafenberger Strasse 58**
**D-3012 Langenhagen (DE)**
Erfinder: **Pfeiffer, Hans**
**Herschelstrasse 27**
**D-3008 Garbsen 4 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBERGRAF, STOCKHOLM 1990

EP 0 231 448 B1

**Beschreibung**

Die Erfindung betrifft eine Laufflächengestaltung für Fahrzeugluftreifen mit mindestens zwei durch Umfangsnuten seitlich begrenzten, sich in Reifenumfangsrichtung erstreckenden Blockreihen, deren Blöcke durch schräg oder senkrecht zur Reifenumfangsrichtung verlaufende Quernuten voneinander getrennt sind, und mit Querrippen, durch die Nuten in räumlich voneinander getrennte Abschnitte unterteilt sind.

Die Nutenunterteilung mittels quer zu den Nuten verlaufender Rippen, die nachfolgend kurz "Querrippen" genannt werden, ist aus der FR-A-938 797 für im wesentlichen in Umfangsrichtung verlaufende Nuten bekannt. Gestaltungen dieser Art zeigen bestimmte, unerwünschte Geräuschbildungen.

Aufgrund der Erfindung soll eine Geräuschbildung der eingangs erwähnten Laufflächengestaltungen unterbunden, zumindest aber in starkem Maße vermindert werden. Es soll demgemäß im vorgenannten Sinne das Fahrgeräusch beeinflußt werden, das Außenstehende beim Vorbeifahren eines Fahrzeugs wahrnehmen können.

Demgemäß liegt der Erfindung die Aufgabe zugrunde, die eingangs erwähnte Laufflächengestaltung so auszubilden, daß das Umweltgeräusch möglichst klein wird.

Die erfindungsgemäße Lösung dieser Aufgabe liegt darin, daß die Querrippen ausschließlich in den Quernuten angeordnet sind und quer zur Richtung der Quernuten verlaufen. Dabei sind in den im wesentlichen in Umfangsrichtung verlaufenden Nuten keine Querrippen angeordnet. Es hat sich gezeigt, daß eine Unterteilung der Quernuten in erfindungsgemäßer Weise das Umweltgeräusch in starkem Maße verringert. Die Erfinder erklären diesen Effekt damit, daß sowohl die einzelnen Abschnitte der Quernuten voneinander als auch die im wesentlichen in Umfangsrichtung verlaufenden, die Blockreihen seitlich begrenzenden Nuten voneinander gewissermaßen akustisch entkoppelt werden.

Zur Erzielung des beschriebenen Effektes hat es sich als ausreichend erwiesen, pro Quernut lediglich eine Querrippe anzuordnen, und zwar etwa auf halber Länge der Quernuten.

Eine vorteilhafte Weiterbildung der Erfindung ist dadurch gekennzeichnet, daß sich die Querrippen von der Sohle der Quernuten bis etwa in die Höhe der Lauffläche erstrecken, vorzugsweise mit ihrer Krone in der Lauffläche angeordnet sind. Es empfiehlt sich weiterhin, daß die Querrippen eine im Vergleich zu ihrer Kronenbreite größere Breite an ihrer Wurzel aufweisen. Demgemäß können Rippen mit einem im wesentlichen dreieckförmigen Querschnitt verwendet werden, deren Basis die Wurzel der Rippen bildet. Die Seitenflächen dieser Rippen können glatt gestaltet sein. Aus akustischen Gründen können sie aber auch rauh ausgebildet und ferner profiliert, z. B. mit Stufen versehen sein.

Im Vergleich zur Länge der vorerwähnten Nuten sind die Rippen nur von geringer Breite. Diese Bemessung kann deshalb gewählt werden, weil sie lediglich aus akustischen Gründen vorgesehen ist und das Profilverhalten insgesamt dabei nicht oder praktisch nicht verändern soll. Insbesondere soll auch der optische Eindruck einer Laufflächengestaltung mit nicht unterbrochenen bzw. nicht in Abschnitte unterteilten Nuten praktisch erhalten bleiben.

Weitere vorteilhafte Ausgestaltungen sind den Unteransprüchen 5 bis 10 sowie dem folgenden, in zwei Figuren veranschaulichten Ausführungsbeispiel zu entnehmen. Es zeigt:

Fig. 1   eine Teildraufsicht auf die Lauffläche eines Fahrzeugluftreifens für Personenkraftwagen und

Fig. 2   einen Schnitt nach der Linie II – II von Fig. 1.

Die Lauffläche des Reifens wird gebildet von fünf Blockreihen 1, 2, 3, 4 und 5, die sich alle in Reifenumfangsrichtung erstrecken und parallel zueinander verlaufen. Die Blockreihen 1 und 5 bilden dabei die Laufflächenränder. Die im wesentlichen rechteckigen, sich quer zur Reifenumfangsrichtung erstreckenden Blöcke 6 dieser beiden Reihen werden durch quer verlaufende Nuten 7 voneinander getrennt. Zwischen den beiden Blockreihen 1 und 5 befinden sich die Blockreihen 2, 3 und 4, die gegenüber den Blockreihen 1 und 5 untereinander durch Umfangsnuten 8 voneinander getrennt sind.

Die die Blockreihen 2, 3 und 4 bildenden Blöcke sind mit 9 bezeichnet. Sie haben einen im wesentlichen parallelogrammförmigen Grundriß und sind durch schräg verlaufende Quernuten 10 voneinander getrennt, die auf halber Länge eine sich etwa in Umfangsrichtung des Reifens verlaufende Abbiegung 11 aufweisen.

Die Abbiegung 11 weist eine quer verlaufende Rippe 12 auf, welche die Quernut 10 auf ihren gesamten Querschnitt durchsetzt, sich also vom Grunde der Nuten bis in die Lauffläche des Reifens erstreckt. Die Querrippe 12 hat eine Basisbreite B von etwa 3 bis 6 mm, während die symmetrisch über der Basis angeordnete Krone eine Breite b hat, die etwa 1 bis 3 mm breit ist. Die Höhe H der Querrippe 12 soll – wie schon erwähnt – der Tiefe der Quernuten 10 entsprechen; dieses Maß entspricht im wesentlichen dem Tiefenmaß der Umfangsnuten 8. Es ist aber auch möglich, die Höhe H der Querrippe 12 geringfügig kleiner zu wählen als die Tiefe der Nuten 8 und 10.

Mit dieser Rippenanordnung werden die Quernuten 10 in zwei Abschnitte 13 und 14 unterteilt, und zwar in akustischer Hinsicht, während die mechanischen Eigenschaften der Blöcke 9 dadurch praktisch nicht beeinflußt werden. Diese Nichtbeeinflussung trifft auch zu im Hinblick auf den optischen Eindruck, den die Laufflächengestaltung vermittelt.

Die Rippen 12 können auch asymmetrisch gestaltet sein und geraute oder gestufte Seitenflächen 15 erhalten.

Aufgrund der Erfindung ist es auch möglich, zwei Querrippen 12 etwa auf einem Drittel und zwei Dritteln der Längenerstreckung der Nuten 10 anzuordnen, so daß in diesem Falle drei entkoppelte Abschnitte der Nuten 10 entstehen. Vorzugsweise wird jedoch nur eine auf halber Länge der Quernuten 10 vorgesehene Querrippe 12 gemäß Ausführungsbeispiel angeordnet.

Vorzugsweise werden die Querrippen 12 so innerhalb der Quernuten angeordnet, daß sie auf kürzestem Wege die einander gegenüberliegenden Seitenbegrenzungsflächen der Quernuten 10 miteinander verbinden.

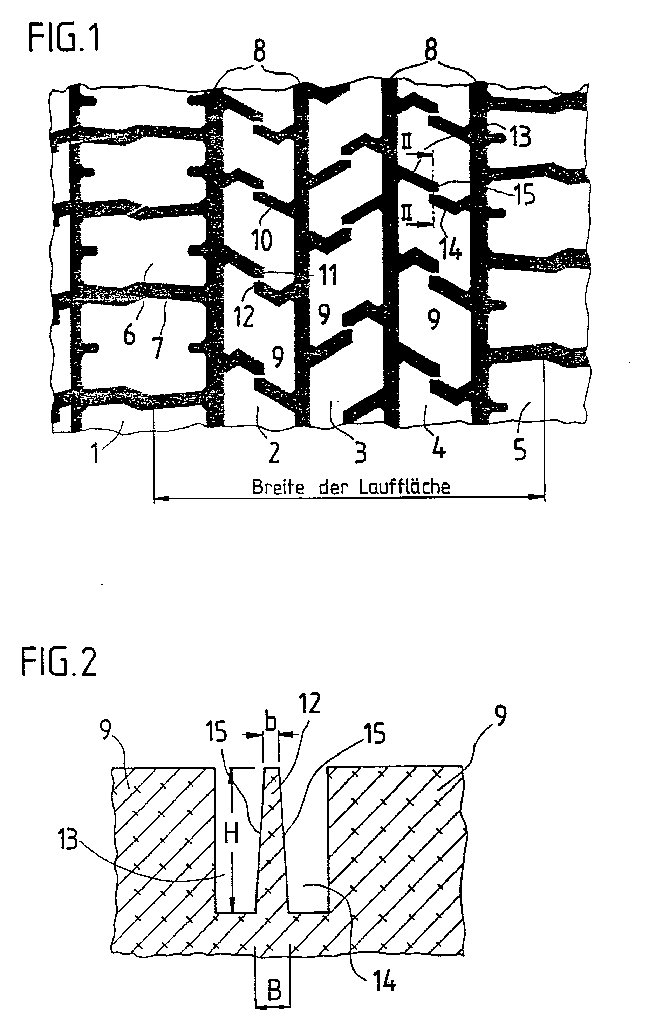

Die wirksame Breite der Lauffläche entspricht dem Maß L der Figur 1.

## Patentansprüche

1. Laufflächengestaltung für Fahrzeugluftreifen, insbesondere für schnell fahrende PKW, mit mindestens zwei durch Umfangsnuten (8) seitlich begrenzten, sich in Umfangsrichtung erstreckenden Blockreihen (2, 3, 4), deren Blöcke (9) durch schräg oder senkrecht zur Umfangsrichtung verlaufende Quernuten (10) voneinander getrennt sind, und mit Querrippen (12), durch die Nuten in räumlich voneinander getrennte Abschnitte unterteilt sind, *dadurch gekennzeichnet,* daß die Querrippen (12) ausschließlich in den Quernuten (10) angeordnet sind und quer zur Richtung der Quernuten verlaufen.

2. Laufflächengestaltung nach Anspruch 1, *dadurch gekennzeichnet,* daß lediglich eine Querrippe (12) etwa auf halber Länge der Quernuten (10) angeordnet ist.

3. Laufflächengestaltung nach Anspruch 1, *dadurch gekennzeichnet,* daß sich die Querrippen (12) von der Sohle der Quernuten (10) bis etwa in die Höhe der Lauffläche erstrecken, vorzugsweise mit ihrer Krone in der Lauffläche angeordnet sind.

4. Laufflächengestaltung nach Anspruch 1, *dadurch gekennzeichnet,* daß die Querrippen (12) eine im Vergleich zu ihrer Kronenbreite (b) größere Breite (B) an ihrer Wurzel aufweisen.

5. Laufflächengestaltung nach Anspruch 4, *dadurch gekennzeichnet,* daß die Breiten (b, B) sich verhalten wie etwa 1 : 2 bis 1 : 3.

6. Laufflächengestaltung nach Anspruch 4, *dadurch gekennzeichnet* daß die Wurzelbreite (B) der Querrippen (12) etwa 3 bis 6 mm beträgt.

7. Laufflächengestaltung nach Anspruch 4, *dadurch gekennzeichnet,* daß die Breite (b) der Rippenkrone etwa 1 bis 3 mm beträgt.

8. Laufflächengestaltung nach Anspruch 1, *dadurch gekennzeichnet,* daß sich die Querrippen (12) auf kürzestem Wege von der einen Quernut-Seitenwand zur gegenüberliegenden erstrecken.

9. Laufflächengestaltung nach Anspruch 1, *dadurch gekennzeichnet,* daß die senkrecht oder schräg zur Reifenumfangsrichtung verlaufenden Quernuten (10) etwa auf halber Länge einen kurzen Abschnitt (11) aufweisen, der sich etwa in Reifenumfangsrichtung erstreckt, und daß die Querrippen (12) diesen kurzen Abschnitt (11) der Quernuten (10) durchsetzen.

10. Laufflächengestaltung nach Anspruch 1, *dadurch gekennzeichnet,* daß die Querrippen (12) einen im wesentlichen dreieckigen Querschnitt mit flach verlaufendem Kronenbereich aufweisen.

## Revendications

1. Dessin de bande de roulement pour pneumatiques de véhicules, notamment pour véhicules privés rapides, comprenant au moins deux files de pavés (2, 3, 4) délimitées latéralement par des rainures circonférentielles (8), s'étendant dans la direction circonférentielle, et dont les pavés (9) sont séparés les uns des autres par des rainures transversales (10) orientées obliquement ou perpendiculairement à la direction circonférentielle, et des nervures transversales (12) qui divisent les rainures en segments séparés les uns des autres dans l'espace, caractérisé en ce que les nervures transversales (12) sont disposées exclusivement dans les rainures transversales (10) et sont orientées transversalement à la direction des rainures transversales.

2. Dessin de bande de roulement selon la revendication 1, caractérisé en ce qu'il est prévu seulement une nervure transversale (12) à peu près à mi-longueur des rainures transversales (10).

3. Dessin de bande de roulement selon la revendication 1, caractérisé en ce que les nervures transversales (12) s'étendent du fond des rainures transversales (10) à peu près jusqu'au niveau de la surface de roulement et sont de préférence disposées de façon à placer leur tête dans le plan de la surface de roulement.

4. Dessin de bande de roulement selon la revendication 1, caractérisé en ce que les nervures transversales (12) présentent une plus grande largeur (B) à leur racine qu'à leur tête (largeur de tête (b)).

5. Dessin de bande de roulement selon la revendication 4, caractérisé en ce que les largeurs (b, B) sont entre elles dans le rapport d'environ 1 : 2 à 1 : 3.

6. Dessin de bande de roulement selon la revendication 4, caractérisé en ce que la largeur à la racine (B) des nervures transversales (12) est d'environ 3 à 6 mm.

7. Dessin de bande de roulement selon la revendication 4, caractérisé en ce que la largeur (b) de la tête des nervures est d'environ 1 à 3 mm.

8. Dessin de bande de roulement selon la revendication 1, caractérisé en ce que les nervures transversales (12) s'étendent d'une paroi latérale de la rainure transversale à la paroi latérale opposée selon la ligne la plus courte.

9. Dessin de bande de roulement selon la revendication 1, caractérisé en ce que les rainures transversales (10) qui sont orientées perpendiculairement ou obliquement à la direction circonférentielle du pneumatique, présentent, à peu près à mi-longueur, un court segment (11) qui s'étend à peu près dans la direction circonférentielle du pneumatique, et en ce que les nervures transversales (12) traversent ce court segment (11) des rainures transversales (10).

10. Dessin de bande de roulement selon la revendication 1, caractérisé en ce que les nervures transversales (12) présentent une section sensiblement triangulaire avec une zone de tête plate.

**Claims**

1. Tread surface pattern for pneumatic vehicle tyres, more especially for high-speed passenger vehicles, having at least two rows of blocks (2, 3, 4), which are laterally defined by circumferential grooves (8) and extend in the circumferential direction, the blocks (9) of said rows being separated from one another by means of transverse grooves (10) which extend inclinedly or vertically relative to the circumferential direction, and having transverse ribs (12), by means of which the grooves are divided into portions which are separated spatially from one another, characterised in that the transverse ribs (12) are disposed exclusively in the transverse grooves (10) and extend transversely relative to the direction of the transverse grooves.

2. Tread surface pattern according to claim 1, characterised in that only one transverse rib (12) is disposed substantially halfway between the transverse grooves (10).

3. Tread surface pattern according to claim 1, characterised in that the transverse ribs (12) extend from the base of the transverse grooves (10) to substantially the level of the tread surface, and they are preferably disposed with their highest point in the tread surface.

4. Tread surface pattern according to claim 1, characterised in that the transverse ribs (12) have a width (B) at their lowest point which is greater than the width (b) at their highest point.

5. Tread surface pattern according to claim 4, characterised in that the widths (b, B) are substantially in the ratio of 1 : 2 to 1 : 3.

6. Tread surface pattern according to claim 4, characterised in that the lower width (B) of the transverse ribs (12) is substantially 3 to 6 mm.

7. Tread surface pattern according to claim 4, characterised in that the width (b) of the rib crown is substantially 1 to 3 mm.

8. Tread surface pattern according to claim 1, characterised in that the shortest distance over which the transverse ribs (12) extend is from one lateral wall of a transverse groove to the one opposite.

9. Tread surface pattern according to claim 1, characterised in that the transverse grooves (10), which extend vertically or inclinedly relative to the circumferential direction of the tyre, have a short portion (11) substantially halfway therebetween, which portion extends substantially in the circumferential direction of the tyre, and in that the transverse ribs (12) intersect this short portion (11) of the transverse grooves (10).

10. Tread surface pattern according to claim 1, characterised in that the transverse ribs (12) have a substantially triangular cross-section with the crown region extending in a flat manner.

FIG.1

Breite der Lauffläche

FIG.2